# EUROPEAN PATENT APPLICATION

(11) **EP 1 900 706 A1**
(43) Date of publication of application: **19.03.2008**
(21) Application number: 06780812.1
(22) Date of filing: 29.06.2006
(51) Int. Cl.: C04B 35/00, B01D 71/02, B01J 20/06, C01B 13/02, C01G 51/00

(54) **OXYGEN EXCESS TYPE METAL OXIDE, AND METHOD AND APPARATUS MAKING USE OF THE METAL OXIDE AND CERAMIC FOR OXYGEN STORAGE OR OXYGEN SELECTIVE MEMBRANE**

(30) Priority: 30.06.2005 JP 2005192187
(71) Applicant: TOKYO INSTITUTE OF TECHNOLOGY, Tokyo 152-8550 (JP)
(72) Inventor: KARPPINEN, Maarit, Tokyo Institute of Technology, Yokohama-shi, Kanagawa 226-8503 (JP); YAMAUCHI, Hisao, Tokyo Institute of Technology, Yokohama-shi, Kanagawa 226-8503 (JP); FJELLVAG, Helmer, Tokyo Institute of Technology, Yokohama-shi, Kanagawa 226-8503 (JP); MOTOHASHI, Teruki, Tokyo Institute of Technology, Yokohama-shi, Kanagawa 226-8503 (JP)
(74) Representative: Charrier, Rapp & Liebau
(86) International application number: PCT/JP2006/313436
(87) International publication number: WO 2007/004684

(57) **Abstract**

An oxygen excess type metal oxide expressed with the following formula (1) and exhibiting high speed reversible oxygen diffusibility whereby a large amount of excess oxygen is diffused at a high speed and reversibly in a low temperature region:

AⱼBₖCₘDₙO_{7+δ} (1)

where
A: one or more trivalent rare earth ions and Ca
B: one or more alkaline earth metals
C, D: one or more oxygen tetra-coordinated cations among which at least one is a transition metal,

where j>0, k>0, and, independently, m≥0, n≥0, and j+k+m+n=6, and 0<δ≤1.5.

## Description

### TECHNICAL FIELD

The present invention relates to an oxygen excess type metal oxide having high speed reversible oxygen diffusibility wherein a large amount of excess oxygen is diffused at a high speed and reversibly in a low temperature region, a ceramic for oxygen storage and/or an oxygen selective membrane comprised of the metal oxide, and various types of methods and apparatuses utilizing the characteristics of the above metal oxide.

### BACKGROUND ART

In recent years, numerous ceramic materials used for fuel cells, three-way catalysts of exhaust gas purification apparatuses, etc. have been developed (see Japanese Patent Publication (A) No. 2005-125317). Ceramics (metal oxides) used for such applications require (i) high oxygen diffusibility for selective, high speed transport of oxygen ions and (ii) large oxygen nonstoichiometry for realization of absorption/release of a large amount of oxygen gas.

At the present time, metal oxides with such characteristics, for example, ZrO₂-Y₂O₃ (YSZ), ZrO₂-CeO₂ (CZ), Bi₄V₂O₁₁ (BIMEVOX), and YBa₂Cu₃O_{6+δ} (Y-123) are known (see Japanese Patent Publication (A) No. 2005-119949 and Hideyuki Sakamoto, Yoshimi Kizaki, and Tomomi Motohiro, R&D Review of Toyota CRDL 37, 14 (2002): "New Method of Evaluation of Oxygen Storing/Release Ability in Milliseconds").

Japanese Patent Publication (A) No. 2005-119949 discloses compositions based on cerium oxide and zirconium oxide and suitably yttrium, scandium, or other rare earth metal oxides and exhibiting a specific surface area of 35 m²/g and an oxygen storage ability of at least O₂:1.5 ml/g (= 27 µmol/g) at 400°C (OSC = oxygen storage/release capacity).

Further, Hideyuki Sakamoto, Yoshimi Kizaki, and Tomomi Motohiro, R&D Review of Toyota CRDL 37, 14 (2002): "New Method of Evaluation of Oxygen Storing/Release Ability in Milliseconds" discloses an oxygen storage material ZrO₂-CeO₂ (CZ) having a maximum value of the oxygen storage amount of up to 1300 µmol-O₂/g.

However, the above materials do not have sufficient oxygen diffusibility and/or oxygen nonstoichiometry in a low temperature region. To function as an oxygen storage material (oxygen storage material) and/or oxygen selective membrane material (oxygen selective membrane), at a relatively low temperature of 400 to 500°C or more is necessary. These are not necessarily optimized materials from the point of the operating temperature.

For a ceramic or metal oxide to exhibit a superior performance as an oxygen storage material and/or oxygen selective membrane material, it must possess sufficient oxygen diffusibility and oxygen nonstoichiometry at 400°C or less, but no ceramic or metal oxide with such characteristics is currently known.

In addition to the above ceramic or metal oxide, YBaCo₄O₇ is known (see M. Valldor and M. Andersson, Solid State Sciences 4, 923 (2002): "The structure of the new compound YBaCo4O7 with a magnetic feature" and "M. Valldor, Solid State Sciences 6, 251 (2004): "Syntheses and structures of compounds with YBaCo4O7 type structure"). E. V. Tsipis, D. D. Khalyavin, S. V. Shiryaev, K. S. Redkina, P. Nunez, Materials Chemistry and Physics 92, 33 (2005): "Electrical and magnetic properties of YBaCo4O7+δ" discloses that YBaCo₄O₇ forms an oxygen excess type phase (YBaCo₄O_{8.5}) at 1000K (=727°C) or less and is a substance which can obtain a high oxygen amount.

However, E. V. Tsipis, D. D. Khalyavin, S. V. Shiryaev, K. S. Redkina, P. Nunez, Materials Chemistry and Physics 92, 33 (2005): "Electrical and magnetic properties of YBaCo4O7+δ" does not describe or suggest that YBaCo₄O₇ has the characteristic of absorbing or releasing oxygen atoms in accordance with a temperature change.

Furthermore, the above research papers do not suggest the possibility of YBaCo₄O₇ as a oxygen storage material and/or oxygen selective membrane material and do not disclose characteristics at 700°C or less.

Whatever the case, no ceramic or metal oxide with sufficient oxygen diffusibility and oxygen nonstoichiometry at 400°C or less and superior as an oxygen storage material or oxygen selective membrane material has been disclosed up to now.

### DISCLOSURE OF THE INVENTION

As explained above, no ceramic or metal oxide provided with sufficient oxygen diffusibility and oxygen nonstoichiometry at 500°C or less, in particular 400°C or less, and superior as an oxygen storage material and/or oxygen selective membrane material has been disclosed up to now.

Therefore, the present invention, in consideration of the above situation, has as its object the provision of a metal oxide with high oxygen diffusibility and large oxygen nonstoichiometry at a low temperature region (500°C or less, in particular 400°C or less) and a ceramic for oxygen storage and/or an oxygen selective membrane comprised of the metal oxide.

In general, a ceramic (metal oxide) exhibiting a high oxygen ion diffusibility and large oxygen nonstoichiometry has the following characteristics (x) and (y):
(x) It includes a metal element able to take various valence numbers.
(y) It has diffusion-paths for oxygen ions to move at a high speed in the crystal.

From the above viewpoint, the inventors believed a layered oxide including Fe, Co, or another transition metal able to take various valence numbers such as +2 to +4 would be promising as a ceramic (metal oxide) for achieving the object of the present invention and engaged in an intensive search for such materials.

As a result, the inventors discovered that one type of layered metal oxides AⱼBₖCₘDₙO_{7+δ}, that is, an oxygen excess type YBaCo₄O_{7+δ} (A=Y, B=Ba, C, D=Co, j=k=m=1, n=3), exhibits an abnormally large thermogravimetric change in the low temperature region of 200 to 400°C.

Further, the inventors performed in detailed thermogravimetric analysis and redox titration and as a result found that the above abnormally large thermogravimetric change is due to the change in the oxygen content (δ) of YBaCo₄O_{7+δ}.

That is, they discovered that an oxygen excess type YBaCo₄O_{7+δ} (A=Y, B=Ba, C, D=Co) is a substance which, when heated, starts to rapidly absorb a large amount of oxygen at about 200°C and further rapidly releases a large amount of oxygen at about 400°C and is a substance which can be a new high performance ceramic material for oxygen storage and/or for an oxygen selective membrane.

The present invention was made based on the above discovery and has as its gist the followings:
(1) An oxygen excess type metal oxide expressed with the following formula (1) and having a high speed, reversible oxygen diffusibility by which a large amount of excess oxygen diffuses at a high speed and reversibly in a low temperature region:

   AⱼBₖCₘDₙO_{7+δ} (1)

   where
   A: one or more trivalent rare earth ions and Ca
   B: one or more alkaline earth metals
   C, D: one or more oxygen tetra-coordinated cations, at least one of which is a transition metal,
   where, j>0, k>0, and, independently, m≥0, n≥0, and j+k+m+n=6, and 0<δ≤1.5
(2) An oxygen excess type metal oxide as set forth in (1) characteristic in that j, k, m, and n satisfy the followings: j=1, k=1, 0≤m≤4, and 0≤n≤4 and m+n=4.
(3) An oxygen excess type metal oxide as set forth in (1) or (2) characteristic in that the trivalent rare earth element is Y.
(4) An oxygen excess type metal oxide as set forth in any one of (1) to (3) characteristic in that the alkaline earth metal element is Ba or Sr.
(5) An oxygen excess type metal oxide as set forth in any one of (1) to (4) characteristic in that the oxygen tetra-coordinated cation is Co, Fe, Zn or Al.
(6) An oxygen excess type metal oxide as set forth in (5) characteristic in that the oxygen tetra-coordinated cation is Co.
(7) An oxygen excess type metal oxide as set forth in any one of (1) to (6) characteristic in that the low temperature region is that of 500°C or lower.
(8) An oxygen excess type metal oxide as set forth in any one of (1) to (6) characteristic in that the low temperature region is that of 200 to 400°C.
(9) A ceramic for oxygen storage and/or an oxygen selective membrane characteristic in that it comprises an oxygen excess type metal oxide expressed by the following formula (1) and having a high speed reversible oxygen diffusibility by which a large amount of excess oxygen diffuses at a high speed and reversibly in a low temperature region:

   AⱼBₖCₘDₙO_{7+δ} (1)

   where
   A: one or more trivalent rare earth ions and Ca
   B: one or more alkali earth metals
   C, D: one or more oxygen tetra-coordinated cations, at least one of which is a transition metal,
   where, j>0, k>0, and, independently, m≥0, n≥0, and j+k+m+n=6, and 0<δ≤1.5
(10) A ceramic for oxygen storage or oxygen selective membrane as set forth in (9) characteristic in that j, k, m, and n satisfy the followings: j=1, k=1, 0≤m≤4, and 0≤n≤4 and m+n=4.
(11) A ceramic for oxygen storage and/or oxygen selective membrane as set forth in (9) or (10) characteristic in that the trivalent rare earth element is Y.
(12) A ceramic for oxygen storage and/or oxygen selective membrane as set forth in any one of (9) to (11) characteristic in that the alkaline earth metal element is Ba or Sr.
(13) A ceramic for oxygen storage and/or oxygen selective membrane as set forth in any one of (9) to (12) characteristic in that the oxygen tetra-coordinated cation is Co, Fe, Zn or Al.
(14) A ceramic for oxygen storage and/or oxygen selective membrane as set forth in (13) characteristic in that the oxygen tetra-coordinated cation is Co.
(15) A ceramic for oxygen storage and/or oxygen selective membrane as set forth in any one of (9) to (14) characteristic in that the low temperature region is that of 500°C or lower.
(16) A ceramic for oxygen storage and/or oxygen selective membrane as set forth in any one of (9) to (14) characteristic in that the low temperature region is that of 200 to 400°C.
(17) An oxygen storing, separating, and/or concentrating method using an oxygen excess type metal oxide as set forth in any one of (1) to (8), the oxygen storage, separating, and concentrating method characteristic in storing, separating, and/or concentrating oxygen in a low temperature region of 200 to 400°C and in a range of the amount of change of oxygen of 0 to 21.4% with respect to the total molar amount of oxygen in the metal oxide.
(18) An oxygen storage, separation, and concentration apparatus characteristic in being provided with an oxygen excess type metal oxide as set forth in any one of (1) to (8) and in storing, separating, and/or concentrating oxygen.
(19) An oxidation reaction apparatus characteristic in being provided with an oxygen excess type metal oxide as set forth in any one of (1) to (8) and using the stored oxygen for an oxidation reaction.
(20) An oxygen enrichment apparatus characteristic in being provided with an oxygen excess type metal oxide as set forth in any one of (1) to (8) and enriching oxygen using the stored oxygen.
(21) A heating apparatus characteristic in being provided with an oxygen excess type metal oxide as set forth in any one of (1) to (8) and warming using the heat generated by the storage, separation, and/or concentration of oxygen.
(22) A cooling apparatus characteristic in being provided with an oxygen excess type metal oxide as set forth in any one of (1) to (8) and cooling using heat-absorption through the storage, separation, and/or concentration of oxygen.
(23) A heat exchange apparatus characteristic in being provided with an oxygen excess type metal oxide as set forth in any one of (1) to (8) and using generation and/or absorptional of heat by the storage, separation, and/or concentration of oxygen for heat exchange.

The oxygen excess type metal oxide of the present invention expressed with the formula (1) is provided with a remarkable thermogravimetric change characteristic in rapidly absorbing and releasing a large amount of oxygen at 500°C or lower, in particular in a region of 200 to 400°C.

For example, the thermogravimetric change corresponding to the absorption of oxygen at 200°C and the release of the oxygen at 400°C in YBaCo₄O_{7+δ} (A=Y, B=Ba, C, D=Co, j=k=1, m=1, n=3) corresponds to 4% of the total weight. The change in the amount of oxygen reaches a maximum of δ=1.5, that is, 20% of the total oxygen amount.

Further, this amount of absorption and release enables us easy to control of the δ value in the range of 0 to 1.5 and of the temperature in the range of 200 to 400°C.

Therefore, the oxygen storage amount of the oxygen excess type metal oxide of the present invention far exceeds the oxygen storage amount of existing oxygen storage materials and is optimum as a high performance ceramic material for oxygen storage and/or for an oxygen selective membrane.

### BRIEF DESCRIPTION OF THE DRAWINGS

FIG. 1 shows X-ray diffraction patterns for a metal oxide YBaCo₄O₇ (top) and an oxygen excess type metal oxide YBaCo₄O_{7+δ} (δ=1.25) (bottom).
FIG. 2 shows the crystal structure of a layered metal oxide AⱼBₖCₘDₙO_{7+δ} (called a "hexagonal LuBaAlZn₃O₇-type structure").
FIG. 3 shows the weight change when raising the temperature of the metal oxide YBaCo₄O₇.
FIG. 4 shows the weight change at the time of raising the temperature of the metal oxide YBaCo₄O₇ in an oxygen stream to about 500°C, then lowering the temperature.
FIG. 5 shows X-ray absorption near end structure (XANES) spectra of the metal oxide YBaCo₄O₇(x₁) and the oxygen excess type metal oxide YBaCo₄O_{7+δ}(x₂).
FIG. 6 shows the weight change when holding the metal oxide YBaCo₄O₇ in a nitrogen gas stream at 270 to 350°C, then switching the atmosphere to an oxygen gas stream.
FIG. 7 shows the atmosphere (oxygen partial pressure) dependence of the oxygen absorbing/releasing phenomenon of the oxygen excess type material YBaCo₄O_{7+δ}.

### BEST MODE FOR CARRYING OUT THE INVENTION

As the starting materials, Y₂O₃, BaCO₃, and Co₃O₄ are used. These were mixed by an agate mortar to give Y:Ba:Co=1:1:4. This mixed powder was placed in an alumina crucible, heated with a temperature raising rate of 2°C/min, and calcined in the atmosphere at 1000°C for 10 hours.

The obtained calcined sample was pulverized and mixed in an agate mortar and pelletized under a pressure of 100 kg/cm² into a 1×1×10 mm³ size. The pellet was heated at a temperature raising rate of 2°C/min, then was heat treated in the atmosphere at 1100°C for 20 hours. At the time of reaching 500°C in the subsequent cooling process, the pellet is taken out from the sintering furnace and rapidly cooled.

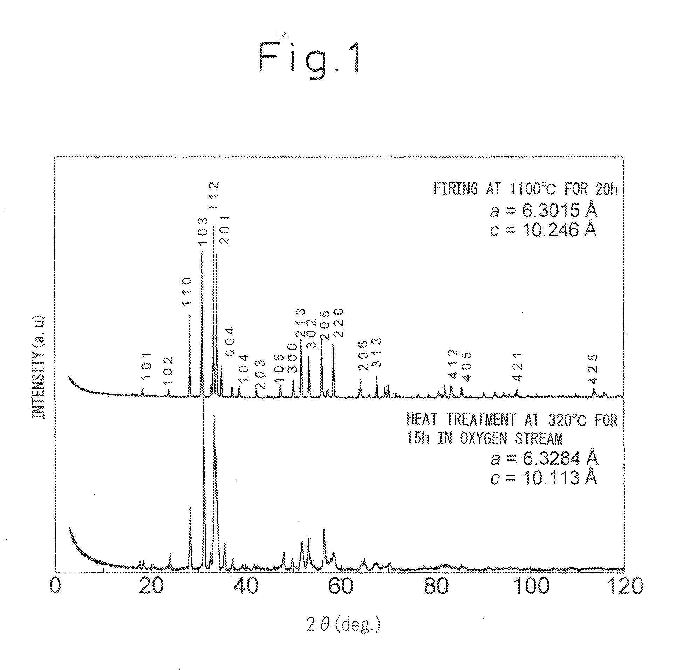

FIG. 1 shows the powder X-ray diffraction pattern of the heat treated sample. As shown in FIG. 1, the heat treated sample is a single phase (in the figure, see top diffraction pattern). Further, using the iodometric titration method (one type of redox titration) and the ICP (inductively coupled plasma) emission analysis method, it was found that the oxygen content of the above heat treated sample was 7.0 and the cation content was Y:Ba:Co=1:1:4.

Therefore, the above heat treated sample was a metal oxide of a chemical composition of YBaCo₄O_{7.0}.

Note that the chemical composition was determined by the following routine:
(1) Finding average value of Co by iodometric titration method.
(2) Finding molar ratio of Y, B, and Co by ICP emission analysis method.
(3) From the molar ratio, normalizing the values of j, k, m, and n in the formula (1) so as to satisfy j+k+m+n=6.
(4) Finding the number of oxygen atoms considering the charge balance from the average value of Co and the values of j, k, m, and n nornmalized at (3).
(5) Determining the chemical composition from the above calculated results.

When using the above calculation method to find the chemical composition, if the measurement error is about 10%, for example, j=1 is a value including the case where the analysis value is j=0.90 to 1.10.

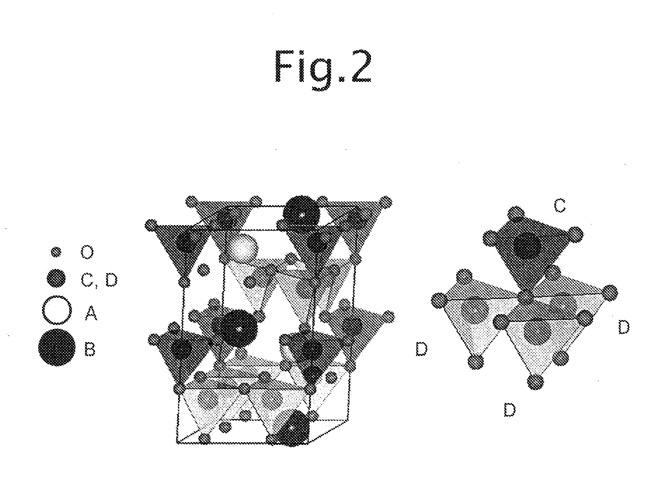

The crystal structure of the above metal oxide YBaCo₄O_{7.0} is refined based on the hexagonal LuBaAlZn₃O₇-type structure shown in FIG. 2. The lattice constants were a=6.3015Å and c=10.246Å.

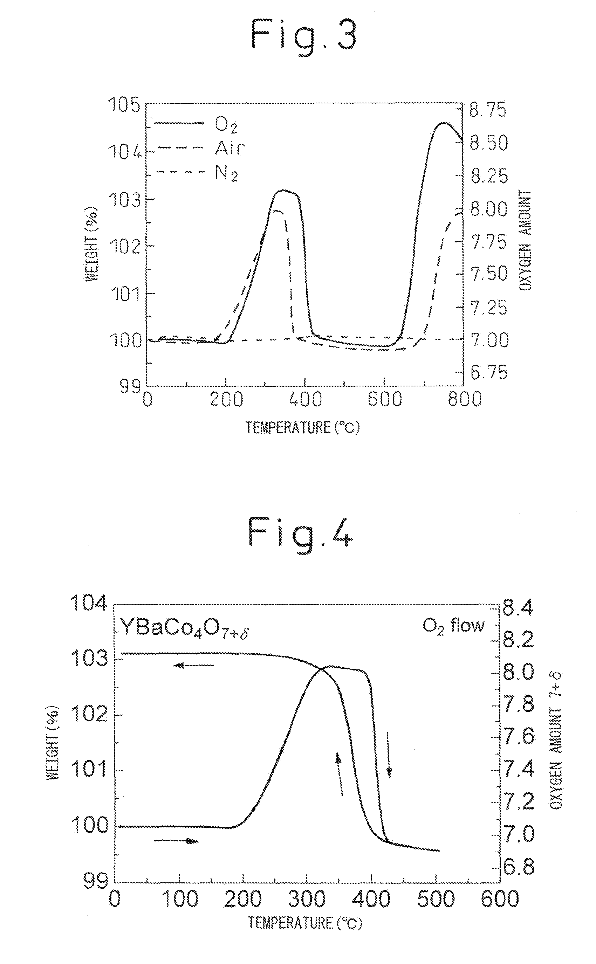

The heat treated YBaCo₄O₇ sample (hereinafter referred to as "the present sample") was analyzed with a thermobalance under various atmospheres by thermogravimetric analysis. The results are shown in FIG. 3.

It was found that if heating the present sample in an oxygen stream at a temperature raising rate of 1°C/min, the present sample exhibits a rapid weight increase phenomenon in which the weight starts to rapidly increase from ≈ 200°C and if further raising the temperature, stops increasing in weight near 320°C and exhibits a rapid weight decrease phenomenon in which the weight starts to rapidly decrease near 400°C and retrieves to its original weight.

That is, it was found that the present sample is a material which exhibits a rapid weight increase/rapid weight decrease phenomenon in a low temperature region of 200 to 400°C.

In FIG. 3, at about 600°C or higher, a phenomenon of a rapid increase in weight is again seen, but it is found as a result of analysis by X-ray diffraction that this rapid weight increase is due to decomposition of the metal oxide.

In the present sample, the above rapid weight increase/decrease phenomenon is seen in the temperature region of 200 to 400°C lower, than the 600°C where the metal oxide does not decompose, but if considering the possibility of a metal oxide as a practical material, a metal oxide which expresses the above rapid weight increase/decrease phenomenon at 500°C or lower is preferable.

Further, it is found that if heating the present sample in the atmosphere with a temperature raising rate of 1°C/min, the present sample exhibits a rapid weight increase phenomenon starting from ≈200°C and if further raising the temperature, stops increasing in weight about 320°C, then exhibits a rapid weight decrease phenomenon and retrieve its original weight.

Further, it was found that if heating the present sample in a nitrogen atmosphere with a temperature raising rate of 1°C/min, the present sample does not exhibit any weight change phenomenon at all.

That is, the inventors discovered that (i) the present sample exhibits a rapid weight increase/decrease phenomenon upon heating and (ii) the weight change phenomenon of the present sample occurs in an oxygen-rich atmosphere.

Specifically, the inventors discovered that the present sample (iii) exhibits the phenomenon in which the weight increases from 0 to 3% about 200°C upon heating in an oxygen-rich atmosphere and furthermore (iv) exhibits the phenomenon in which the weight decreases and retrieves its original weight about 320°C.

These discoveries form the basis of the present invention.

Furthermore, the inventors discovered that whether the above weight change phenomenon is a reversible phenomenon or not is important as a ceramic for oxygen storage and/or for an oxygen selective membrane, so to confirm if the above weight change phenomenon is a reversible phenomenon, raised the temperature of the present sample in an oxygen stream with a temperature raising rate of 1°C/min up to about 500°C in the range where the metal oxide will not decompose, then started the cooling with a temperature lowering rate of 1°C/min and measured the weight change of the present sample in the temperature raising and temperature lowering process. The results are shown in FIG. 4.

From FIG. 4, it is understood that the present sample rapidly increases in weight by about 3% from ≈400°C upon cooling and reaches a weight of the same extent as the maximum weight in the temperature raising process. That is, it was found that in the present sample the weight change phenomenon occurring about 400°C is reversible.

Here, to confirm the existence of a phase change accompanying the above weight change, the inventors heat treated the present sample in an oxygen gas stream at 240 to 390°C for 15 to 24 hours and performed X-ray diffraction analysis. FIG. 1 shows the X-ray diffraction pattern for the present sample heat treated in an oxygen gas stream at 320°C for 15 hours (in the figure, see the bottom X-ray diffraction pattern).

Further, the sample heat treated in the oxygen gas stream (oxygen annealing treatment) (oxygen annealed samples) was confirmed to have a crystal structure with the same space group as the original YBaCo₄O₇ and be a single phase not including other phases (for example, impurity phases).

However, the lattice constants of the oxygen annealed sample are a=6.3284Å and c=10.113Å. These are clearly different from the lattice constants of the original YBaCo₄O₇ (a=6.3015Å and c=10.246Å).

Furthermore, the inventors used the iodometric titration method and ICP emission analysis method to measure the amount of oxygen of the oxygen annealed sample, and found that the oxygen content was δ=1.25; that is, the sample contains a large amount of oxygen in excess, "YBaCo₄O_{7+1.25}".

From the above, the inventors concluded that the reversible rapid weight increase/decrease phenomenon at 200 to 400°C seen in thermogravimetric analysis for YBaCo₄O₇ is related to the reversible absorption/release of a large amount of oxygen.

The fact that "YBaCo₄O₇" is a metal oxide with the characteristic of reversible absorption/release of a large amount of oxygen at 200 to 400°C has never been reported before.

That is, the inventors discovered that the oxygen excess type oxide YBaCo₄O_{7+δ} is present as a stable phase in a narrow low temperature region of 200 to 400°C in an oxygen-rich atmosphere and reversibly absorbs/releases a large amount of oxygen.

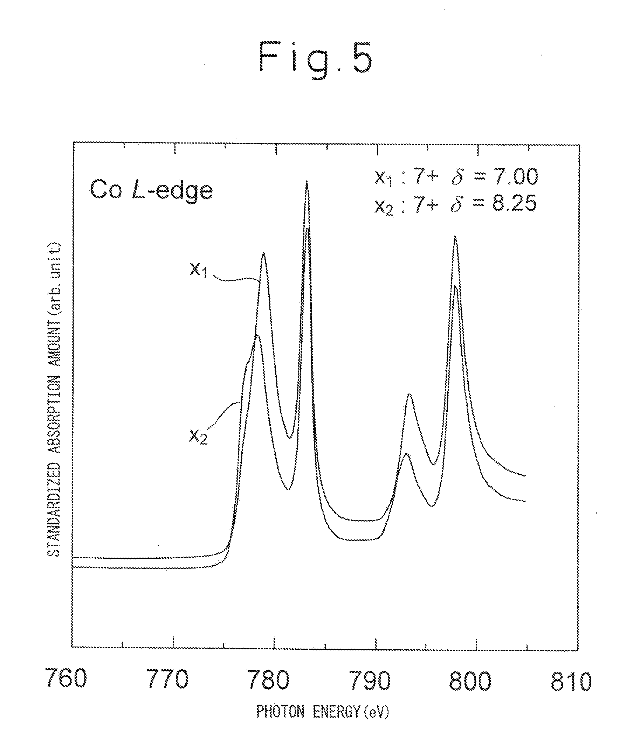

To explain the characteristics of the oxygen excess type metal oxide YBaCo₄O_{7+δ}, the inventors investigated the electronic state of cobalt ions of the metal oxide YBaCo₄O₇ and oxygen excess type metal oxide YBaCo₄O_{7+δ} (δ=1.25) using an X-ray absorption near edge structure (XANES) spectroscopy. The results are shown in FIG. 5.

There is a clear difference between the two spectra (x1:7+δ=7.00 and x2:7+δ=8.25). This means that the electron state of the cobalt ions differs, so the oxygen excess type metal oxide YBaCo₄O_{7+δ} discovered by the inventors can be called a "new material".

Furthermore, the inventors prepared an oxygen annealed sample under various oxygen partial pressures (≥100 atmosphere) and temperatures and determined the oxygen amount and their change. As a result, it was found that in an oxygen excess type metal oxide YBaCo₄O_{7+δ}, the excess oxygen amount δ reaches a maximum of 1.5.

This δ-value (1.5) corresponds to 4% of the total weight and to 20% of the total oxygen amount as well, so if using this new oxygen excess type metal oxide as a ceramic for oxygen storage, it may be expected to obtain a ceramic for oxygen storage with an oxygen storage capability of 1300 µmol-O₂/g.

This oxygen storage capability is equal to the 1300 µmol-O₂/g of the recently discovered high performance oxygen storage material ZrO₂-CeO₂ (CZ).

FIG. 3 shows that the present sample does not exhibit any weight change phenomenon at all in a nitrogen atmosphere, but from the experimental results, the inventors conjectured that the oxygen partial pressure in the atmosphere may be involved in the oxygen absorption/release mechanism.

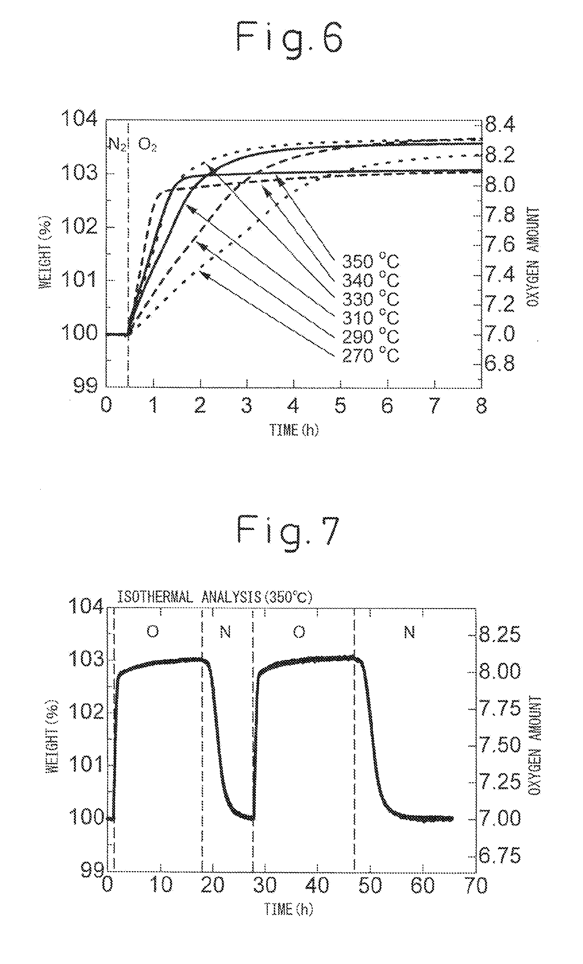

Further, to clarify the oxygen absorption/release mechanism of the oxygen excess type metal oxide YBaCo₄O_{7+δ}, the inventors held the metal oxide YBaCo₄O₇ the original phase in a nitrogen gas stream at 270 to 350°C, then switched the atmosphere to an oxygen gas stream and measured the weight change. The results are shown in FIG. 6.

From FIG. 6, it is found that if held at 340°C, the metal oxide YBaCo₄O₇ quickly absorbs oxygen gas corresponding to 15% of the total oxygen amount (δ≈1) and within just 30 minutes changes to oxygen excess type metal oxide YBaCo₄O_{7+δ}.

Further, as shown in FIG. 4, the rapid oxygen absorption/release behavior of oxygen excess type metal oxide YBaCo₄O_{7+δ} is performed substantially 100% reversibly.

Further, considering also the fact that this rapid reversible oxygen absorption/release behavior does not accompany a phase decomposition or a change in the crystal structure, the oxygen excess type metal oxide YBaCo₄O_{7+δ} of the present invention can be advantageous for practical applications in which repeated usage cycles are required.

FIG. 6 shows that in a nitrogen atmosphere, the metal oxide YBaCo₄O_{7+δ} does not exhibit any oxygen absorption/release phenomenon. The inventors investigated in detail the oxygen partial pressure dependence of this oxygen absorbing/releasing phenomenon. The results are shown in FIG. 7.

From FIG. 7, it is found that the metal oxide YBaCo₄O₇ held in a nitrogen gas stream at 350°C rapidly starts to absorb oxygen when switching from a nitrogen gas stream to an oxygen gas stream, reaches a weight increase of 3 weight% (δ≈8.00) after 18 hours, then, when switching from an oxygen gas stream to a nitrogen gas stream, rapidly releases the absorbed oxygen, and returns to the original metal oxide (δ=7).

The dependence of the rapid oxygen absorption/release phenomenon on oxygen partial pressure itself is a unique characteristic not known up to now. In addition, as shown in FIG. 6, the oxygen partial pressure dependence of this rapid oxygen absorption/release phenomenon is reversible. This point is also a unique characteristic not known up to now.

That is, the oxygen excess type metal oxide YBaCo₄O_{7+δ} of the present invention shows characteristics advantageous for oxygen storage or for an oxygen selective membrane with which repeated usage cycles are required.

As explained above, the present invention is based on the discovery of an oxygen excess type metal oxide AⱼBₖCₘDₙO_{7+δ} (0<δ≤1.5) exhibiting the phenomenon of absorbing/releasing a large amount of excess oxygen in a low temperature region with a high speed and reversibly.

The above oxygen absorption/release phenomenon is based on the oxygen diffusibility, so the excess type metal oxide AⱼBₖCₘDₙO_{7+δ} (0<δ≤1.5) of the present invention is characterized by having an oxygen diffusibility by which a large amount of excess oxygen diffuses at a high speed and reversibly in a low temperature region, that is, a high speed reversible oxygen diffusibility.

Here, A represents one or more trivalent rare earth ions and/or bivalent Ca, B represents one or more alkaline earth metal, and C and D are one or more oxygen tetra-coordinated cation, at least one of which is a transition metal.

As the trivalent rare earth element, Y is preferable. For this reason, as the A element, one or both of Y and Ca may be selected, but the site occupied by the A element (A site) may have a plurality of elements in solid solution there, so there may also be three or more types of A elements.

As an alkaline earth metal, bivalent ions of Ba and Sr are preferable, but the B site may also have a plurality of elements in solid solution there, so there may also be three or more types of B elements.

The oxygen tetra-coordinated cation need only be an element which forms an oxygen tetrahedron, in particular, is not limited to a specific element, but Co, Fe, Zn, Al, or another element is preferred. Any suitable two or more of these four types of elements may be selected, but at least one type of transition metals must be included. Note that as the C and D element, the same element may be selected from the oxygen tetra-coordinated elements.

As combinations of specific elements, in addition to YBaCo₄O_{7.0+δ}, ScBaCo₄O_{7.0+δ}, YSrCo₄O_{7.0+δ}, and ScSrCo₄O_{7.0+δ} may be mentioned.

Furthermore, the compounds described in the above-mentioned M. Valldor, *Solid State Sciences* 6, 251 (2004), p. 254, Table 2 and Table 3 may also be mentioned.

That is, LuBaCo₄O_{7.0+δ}, YbBaCo₄O_{7.0+δ}, TmBaCo₄O_{7.0+δ}, ErBaCo₄O_{7.0+δ}, HoBaCo₄O_{7.0+δ}, DyBaCo₄O_{7.0+δ}, and furthermore the above illustrated compounds where Ba is replaced by Sr may be mentioned.

Further, as combinations of specific elements, YBaCo₃ZnO_{7.0+δ}, YBaCo₂Zn₂O_{7.0+δ}, YBaCoZn₃O_{7.0+δ}, YBaCo₃FeO_{7.0+δ}, and YBaZn₃FeO_{7.0+δ} may be mentioned. Furthermore, in these compounds, ones where Y is replaced by Sc, Ba is replaced by Sr, or Y is replaced by Sc and Ba is replaced by Sr may be mentioned.

In addition, as combinations of specific elements, CaBaZn₂Fe₂O_{7.0+δ}, CaBaZn₂FeAlO_{7.0+δ}, CaBaCo₂ZnAlO_{7.0+δ}, CaBaCoZn₂AlO_{7.0+δ}, CaBaCo₃AlO_{7.0+δ}, CaBaCo₃FeO_{7.0+δ}, CaBaCO₂ZnFeO_{7.0+δ}, CaBaCoZn₂FeO_{7.0+δ}, CaBaCo₂Fe₂O_{7.0+δ}, CaBaCoZnFe₂O_{7.0+δ}, CaBaCo₃ZnO_{7.0+δ}, and CaBaCo₂Zn₂O_{7.0+δ} may be mentioned. Furthermore, in these combinations, ones where Ba are replaced by Sr may also be mentioned.

The oxygen excess type metal oxide YBaCo₄O_{7+δ} exhibits high speed reversible oxygen diffusibility whereby a large amount of excess oxygen diffuses at a high speed and reversibly in a low temperature region of 500°C or lower, in particular 200 to 400°C, but depending on the chemical composition of the metal oxide, the above oxygen absorption/release phenomenon will sometimes be expressed near 300°C.

Note that the amount of oxygen absorbed/released of the present invention is usually controlled in the range of 0 to 100 atmospheres. The upper limit is preferably 10 atmospheres, more preferably 1 atmosphere.

The oxygen excess type metal oxide YBaCo₄O_{7+δ} of the present invention exhibits the aforementioned high speed reversible oxygen diffusibility in a low temperature region and can be highly practically applied as a ceramic for oxygen storage. The unique characteristic of the oxygen absorbing/releasing phenomenon is expressed by the aforementioned high speed reversible oxygen diffusibility being dependent on the atmosphere (oxygen partial pressure). Thus, YBaCo₄O_{7+δ} can be highly practically applied as a ceramic for an oxygen selective membrane.

### EXAMPLES

Next, an example of the present invention will be explained, but the set of conditions is just an example employed for confirming the workability and effect of the present invention. The present invention is not limited to this example of conditions. The present invention can employ various conditions so long as not deviating from the gist of the present invention and achieving the object of the present invention.

### (Example)

As starting materials, Y₂O₃, BaCO₃, and Co₃O₄ were used. These were mixed with an agate mortar to give Y:Ba:Co=1:1:4.

Alternatively, in accordance with the EDTA complex gel method, Y₂O₃, Ba (NO₃)₂, and Co(NO₃)₂·6H₂O were dissolved in concentrated nitric acid, and EDTA dissolved in ammonia water was added so as to prepare a colloid solution (sol). Furthermore, this solution was heated at 200°C to remove the moisture and prepare a mixed powder.

These two types of mixed powders were placed in separate alumina crucibles, heated with a temperature raising rate of 2°C/min, and calcined in air at 1000°C for 10 hours.

The obtained calcined samples were pulverized in an agate mortar, mixed, and pelletized under a pressure of 100 kg/cm² to sizes of 1×1×10 mm³. The pellets were heated with a temperature raising rate of 2°C/min, then heat treated in air at 1100°C for 24 hours.

When reaching 500°C in the subsequent cooling process, the pellets were taken out from the furnace and rapidly cooled.

The samples prepared in each of the methods were confirmed to be single phases by powder X-ray diffraction. Further, the iodometric titration method (one type of redox titration) and ICP emission analysis were used to confirm that the oxygen contents of the samples were 7.0 and the chemical compositions were YBaCo₄O_{7.0} (see FIG. 1).

The crystal structures was the hexagonal LuBaAlZn₃O₇ type structure shown in FIG. 2. The lattice constants were a=6.3015Å and c=10.246Å.

A thermobalance was used for thermogravimetric analysis for the YBaCo₄O₇ samples under various atmospheres. If heating the resultant samples in an oxygen stream with a temperature raising rate of 1°C/min, in the same way as the weight change shown in FIG. 3, the weight rapidly increases from ≈200°C. If further raising the temperature, the weight rapidly decreases about 400°C and retrieves to the original weight.

Samples annealed in an oxygen gas stream at 240 to 390°C for 24 hours (oxygen annealed samples) were prepared and used for X-ray diffraction analysis. As a result, it was confirmed that the oxygen annealed samples all had crystal structures with the same space group as the original YBaCo₄O₇ and were single phases not containing other phases (for example, impurity phases) (see FIG. 1).

The lattice constants of the oxygen annealed samples were a=6.3284Å and c=10.113Å and clearly different from the lattice constants of the original YBaCo₄O₇ (a=6.3015Å and c=10.246Å).

Furthermore, the iodometric titration method was used to determine the oxygen amount, whereupon the oxygen annealed samples were found to contain a large amount of oxygen in excess at δ=1.25.

The prepared YBaCo₄O₇ samples were held in a nitrogen gas stream at 270 to 350°C, the atmosphere was switched to an oxygen gas stream, then the weight change was measured. As a result, it was confirmed that a weight change similar to the weight change shown in FIG. 6 occurred. Further, it was confirmed that an oxygen partial pressure dependence shown in FIG. 7 also was remarkably observed.

### INDUSTRIAL APPLICABILITY

As explained above, the oxygen excess type oxide AⱼBₖCₘDₙO_{7+δ} of the present invention exhibits a remarkable thermogravimetric change characteristic which is related to rapid absorption release of a large amount of oxygen at 500°C or lower, in particular 200 to 400°C and is a promising material as a ceramic for high performance oxygen storage or for an oxygen selective membrane.

Further, by utilizing the superior oxygen absorption and release characteristics of the oxygen excess type metal oxide AⱼBₖCₘDₙO_{7+δ} of the present invention and applying them to, for example, an oxygen storage apparatus, oxygen separation apparatus, oxygen concentration apparatus, oxygen enrichment apparatus, etc., it is possible to reduce the size of the apparatus and save energy more than the case when using a conventional oxygen absorption/release material.

Furthermore, due to the above characteristics, the oxygen excess type metal oxide AⱼBₖCₘDₙO_{7+δ} of the present invention is useful as a fuel cell or three-way catalyst of an exhaust gas purification apparatus of an automobile operating in a low temperature region.

Therefore, the present invention has great industrial applicability.

## Claims

1. An oxygen excess type metal oxide expressed with the following formula (1) and having a high speed, reversible oxygen diffusibility by which a large amount of excess oxygen diffuses at a high speed and reversibly in a low temperature region:
AⱼBₖCₘDₙO_{7+δ} (1)
where
A: one or more trivalent rare earth ions and Ca
B: one or more alkaline earth metals
C, D: one or more oxygen tetra-coordinated cations, at least one of which is a transition metal element,
where, j>0, k>0, and, independently, m≥0, n≥0, and j+k+m+n=6, and 0<δ≤1.5

2. An oxygen excess type metal oxide as set forth in claim 1 characteristic in that said j, k, m, and n satisfy the followings: j=1, k=1, 0≤m≤4, and 0≤n≤4 and m+n=4.

3. An oxygen excess type metal oxide as set forth in claim 1 or 2 characteristic in that said trivalent rare earth element is Y.

4. An oxygen excess type metal oxide as set forth in any one of claims 1 to 3 characteristic in that said alkaline earth metal element is Ba or Sr.

5. An oxygen excess type metal oxide as set forth in any one of claims 1 to 4 characteristic in that said oxygen tetra-coordinated cation is Co, Fe, Zn or Al.

6. An oxygen excess type metal oxide as set forth in claim 5 characteristic in that said oxygen tetra-coordinated element is Co.

7. An oxygen excess type metal oxide as set forth in any one of claims 1 to 6 characteristic in that said low temperature region is that of 500°C or lower.

8. An oxygen excess type metal oxide as set forth in any one of claims 1 to 6 characteristic in that said low temperature region is that of 200 to 400°C.

9. A ceramic for oxygen storage and/or an oxygen selective membrane characteristic in that it comprises an oxygen excess type metal oxide expressed by the following formula (1) and having a high speed reversible oxygen diffusibility by which a large amount of excess oxygen diffuses at a high speed and reversibly in a low temperature region:
AⱼBₖCₘDₙO_{7+δ} (1)
where
A: one or more trivalent rare earth ions and Ca
B: one or more alkaline earth metals
C, D: one or more oxygen tetra-coordinated cations, at least one of which is a transition metal,
where, j>0, k>0, and, independently, m≥0, n≥0, and j+k+m+n=6, and 0<δ≤1.5

10. A ceramic for oxygen storage and/or oxygen selective membrane as set forth in claim 9 characteristic in that said j, k, m, and n satisfy the followings: j=1, k=1, 0≤m≤4, and 0≤n≤4 and m+n=4.

11. A ceramic for oxygen storage and/or oxygen selective membrane as set forth in claim 9 or 10 characteristic in that said trivalent rare earth element is Y.

12. A ceramic for oxygen storage and/or oxygen selective membrane as set forth in any one of claims 9 to 11 characteristic in that said alkaline earth metal element is Ba or Sr.

13. A ceramic for oxygen storage and/or oxygen selective membrane as set forth in any one of claims 9 to 12 characteristic in that said oxygen tetra-coordinated element is Co, Fe, Zn or Al.

14. A ceramic for oxygen storage and/or oxygen selective membrane as set forth in claim 13 characteristic in that said oxygen tetra-coordinated element is Co.

15. A ceramic for oxygen storage and/or oxygen selective membrane as set forth in any one of claims 9 to 14 characteristic in that said low temperature region is that of 500°C or lower.

16. A ceramic for oxygen storage and/or oxygen selective membrane as set forth in any one of claims 9 to 14 characteristic in that said low temperature region is that of 200 to 400°C.

17. An oxygen storing, separating, and/or concentrating method using an oxygen excess type metal oxide as set forth in any one of claims 1 to 8, said oxygen storage, separating, and concentrating method characteristic in storing, separating, and/or concentrating oxygen in a low temperature region of 200 to 400°C and in a range of the amount of change of oxygen of over 0 to 21.4% with respect to the total molar amount of oxygen in said metal oxide.

18. An oxygen storage, separation, and concentration apparatus characteristic in being provided with an oxygen excess type metal oxide as set forth in any one of claims 1 to 8 and in storing, separating, and/or concentrating oxygen.

19. An oxidation reaction apparatus characteristic in being provided with an oxygen excess type metal oxide as set forth in any one of claims 1 to 8 and using the stored oxygen for an oxidation reaction.

20. An oxygen enrichment apparatus characteristic in being provided with an oxygen excess type metal oxide as set forth in any one of claims 1 to 8 and enriching oxygen using the stored oxygen.

21. A heating apparatus characteristic in being provided with an oxygen excess type metal oxide as set forth in any one of claims 1 to 8 and warming using the heat generated by the storage, separation, and/or concentration of oxygen.

22. A cooling apparatus characteristic in being provided with an oxygen excess type metal oxide as set forth in any one of claims 1 to 8 and cooling using heat-absorption through the storage, separation, and/or concentration of oxygen.

23. A heat exchange apparatus characteristic in being provided with an oxygen excess type metal oxide as set forth in any one of claims 1 to 8 and using generation and/or absorption of heat by the storage, separation, and/or concentration of oxygen for heat exchange.
